# EUROPÄISCHE PATENTSCHRIFT

(11) **EP 4 652 644 B1**
(45) Veröffentlichungstag und Bekanntmachung des Hinweises auf die Patenterteilung: **25.11.2026**
(21) Anmeldenummer: 23701658.9
(22) Anmeldetag: 20.01.2023
(51) Int. Cl.: A62C 99/00, H01M 50/383, A62C 3/16, H01M 50/358, H01M 50/392

(54) **BATTERIELÖSCHBEHÄLTER**
BATTERY EXTINGUISHING CONTAINER
CONTENANT D'EXTINCTION DE BATTERIE

(43) Veröffentlichungstag der Anmeldung: 26.11.2025
(73) Patentinhaber: Sprakel, Dirk K., 50968 Köln (DE)
(72) Erfinder: Sprakel, Dirk K., 50968 Köln (DE)
(74) Vertreter: Cohausz & Florack
(86) Internationale Anmeldenummer: PCT/EP2023/051323
(87) Internationale Veröffentlichungsnummer: WO 2024/153343

(56) Entgegenhaltungen:
- CN-A- 114 221 085
- CN-A- 114 824 537
- US-A1- 2016 308 182
- US-A1- 2022 158 296

## Beschreibung

Der Gegenstand betrifft einen Energiespeicheraufbewahrungsbehälter, insbesondere zur Aufbewahrung von zumindest einem elektrischen Energiespeicher.

Eine Vielfalt von technischen Gebieten durchläuft gegenwärtig eine fortschreitende Elektrifizierung. Dies betrifft allen voran die Elektromobilität, aber auch die Energieversorgung von Haushalten, Produktionsstätten sowie viele weitere Bereiche. Oft muss hierbei momentan verfügbare elektrische Leistung in Energiespeichern zum späteren Abruf zwischengespeichert werden. Dies betrifft insbesondere Anwendungen, in denen keine durchgehende Energieversorgung über das elektrische Verteilnetz möglich ist. So müssen beispielsweise elektrische Fahrzeuge wie Automobile, Schiffe oder Flugzeuge während ihrer Fahrt ausreichend Energie aus einem Energiespeicher abrufen können. Doch auch in stationären Anwendungen, beispielsweise im Hausnetz, finden sich zunehmend Energiespeicher, in denen beispielsweise von erneuerbaren Energiequellen bereitgestellte Energie zum späteren Abruf vorgehalten wird.

Energiespeicher wandeln elektrische Energie in vielfältiger Weise in potentielle Energie um. Weit verbreitet sind elektrochemische Energiespeicher, insbesondere Akkumulatoren. Diese umfassen beispielsweise Blei-, Natrium-Nickelchlorid-, Nickel-Metallhybrid- und Lithium-Ionen-Akkumulatoren. Auch sind andere Energiespeicher wie Wasserstofftanks in Kombination mit Brennstoffzellen bekannt.

Ein gemeinsamer Nachteil vieler dieser Energiespeicher ist ihr Zerstörungspotential im Fehlerfall. Denn die in ihnen gespeicherte Energie kann, anstatt kontrolliert in elektrische Leistung umgewandelt zu werden, auch unkontrolliert frei werden. Nicht selten führt dies zur Freisetzung einer großen Menge an Wärmeenergie. Diese Wärmeenergie kann kurzfristig eine solche hohe Leistung freisetzen, dass Teile des Energiespeichers und schließlich Teile seiner Umgebung in Brand geraten. Emission von heißen, teilweise toxischen Gasen bei starker Hitze ist in diesem Falle keine Seltenheit. Für Brände von Energiespeichern, insbesondere von elektrochemischen Energiespeichern, ist charakteristisch, dass sehr schnell große Mengen an hochkonzentrierten toxischen und/oder korrosiven Brandfluiden, beispielsweise Gasen, mit extrem hohen Temperaturen emittiert werden. Selbst wenn ein Energiespeicher im Brandfall somit in einem geschlossenen Bereich untergebracht ist, müssen dennoch große Mengen an Brandfluiden aus diesem Bereich abgeführt werden, ohne die Umgebung zu sehr zu belasten.

Die Veröffentlichung US 2016/308182 A1 beschreibt einen Behälter für ein Behandlungsmittel, der mit einem Abluftrohr verbunden ist.

Hieraus ergibt sich die Aufgabe, den von einem Energiespeicher im Fehlerfall verursachbaren Schaden zu minimieren und insbesondere Lebewesen und Gegenstände im Umfeld vor Brandfluiden zu schützen.

Gegenständlich wird die Aufgabe durch ein Verfahren zum Betreiben eines Energiespeicheraufbewahrungsbehälters nach Anspruch 1 gelöst.

Der Energiespeicheraufbewahrungsbehälter ist insbesondere zur dauerhaften Aufbewahrung zumindest eines Energiespeichers, insbesondere eines elektrischen Energiespeichers eingerichtet. Beispielsweise kann der Energiespeicheraufbewahrungsbehälter zumindest eine Aufnahme für einen Energiespeicher aufweisen.

Ein Energiespeicher kann in dem Energiespeicheraufbewahrungsbehälter angeordnet sein. Beispielsweise kann der Energiespeicher fest in dem Energiespeicheraufbewahrungsbehälter verbaut sein. Beispielsweise kann der Energiespeicher mit dem Energiespeicheraufbewahrungsbehälter kraftschlüssig, formschlüssig und/oder stoffschlüssig verbunden sein. Beispielsweise kann der Energiespeicher mit dem Energiespeicheraufbewahrungsbehälter integriert sein, sodass der Energiespeicher insbesondere nicht zerstörungsfrei aus dem Energiespeicheraufbewahrungsbehälter entfernt werden kann.

Der Energiespeicheraufbewahrungsbehälter umfasst ein Gehäuse. Das Gehäuse umfasst insbesondere zumindest eine oder mehrere Wände. Das Gehäuse kann insbesondere dazu eingerichtet sein, zumindest einen Energiespeicher aufzunehmen. Beispielsweise kann eine Aufnahme für den zumindest einen Energiespeicher durch das Gehäuse gebildet sein. Beispielsweise kann das Gehäuse eine von dem Gehäuse separate Aufnahme einhausen. Die Aufnahme kann beispielsweise zumindest eine Halterung für einen Energiespeicher aufweisen. Beispielsweise kann die Halterung als eine Gewinde, Bolzen, Klammer, Clip, Keil, Regel, Gurt und/oder Kombinationen hieraus gebildet sein.

Das Gehäuse ist insbesondere geschlossen. Beispielsweise kann das Gehäuse im Wesentlichen druckdicht, hermetisch, fluiddicht, insbesondere gasdicht und/oder flüssigkeitsdicht geschlossen ausgeführt sein. Das Gehäuse kann insbesondere verschließbar sein. Das Gehäuse kann alternativ oder zusätzlich öffnenbar sein. Beispielsweise kann das Gehäuse zumindest einen Verschluss umfassen. Der Verschluss kann beispielsweise als Deckel ausgeführt sein. Beispielsweise kann der Verschluss zumindest eine oder mehrere Öffnungen des Gehäuses verschließen, insbesondere zumindest eine Öffnung, durch die ein Energiespeicher in das Gehäuse eingebracht werden kann. Beispielsweise kann der Verschluss druckdicht, hermetisch, fluiddicht, insbesondere gasdicht und/oder flüssigkeitsdicht ausgeführt sein.

Verbindungen zwischen einem Innenraum und einem Außenraum des Gehäuses, beispielsweise Kabel oder Rohre, können vorgesehen sein. Diese können beispielsweise jeweils mittels druckdichter und/oder fluiddichter Durchführungen durch eine jeweilige Wand des Gehäuses geführt sein.

Der Energiespeicheraufbewahrungsbehälter kann beispielsweise fest an einem Ort verbaut sein, insbesondere mit zumindest einem Element seiner Umgebung fest verbunden sein. Beispielsweise kann der Energiespeicheraufbewahrungsbehälter im einen Gebäude und/oder in einem Fahrzeug untergebracht sein, insbesondere ortsfest. Der Energiespeicheraufbewahrungsbehälter kann also beispielsweise stationär innerhalb seiner Umgebung angeordnet sein. Das Gehäuse kann hierfür beispielsweise Befestigungsmittel aufweisen. Die Befestigungsmittel können am Gehäuse angeordnet sein und beispielsweise als Ausnehmungen für eine Schraubverbindung geformt sein. Durch die Befestigungsmittel kann das Gehäuse ortsfest angeordnet werden und dauerhaft in Bezug auf seine Umgebung fixiert bleiben. Auch möglich ist es, dass der Energiespeicheraufbewahrungsbehälter portabel ist.

Das Gehäuse kann beispielsweise zumindest teilweise aus einem hitzebeständigen und/oder feuerfesten Material gefertigt sein. Beispielsweise kann das Gehäuse aus einem Metallwerkstoff, beispielsweise Eisen und/oder Stahl, einem temperaturbeständigen Kunststoff, einem mineralischen Werkstoff wie beispielsweise Keramik, Beton und/oder Mauerwerk und/oder Kombinationen hieraus gefertigt sein.

Der Energieaufbewahrungsbehälter umfasst ferner zumindest ein an dem Gehäuse angeordneten Abluftstutzen. Der Abluftstutzen ist dazu eingerichtet, einen Innenraum des Gehäuses fluidisch mit einem Außenraum des Gehäuses zu verbinden.

Der Innenraum des Gehäuses ist insbesondere zumindest teilweise von dem Gehäuse umschlossen. In dem Innenraum des Gehäuses kann zumindest ein Energiespeicher angeordnet sein.

Der Außenraum des Gehäuses ist von dem Innenraum des Gehäuses zumindest teilweise, bevorzugt vollständig, mit der Ausnahme des Abluftstutzens durch das Gehäuse getrennt. Der Außenraum des Gehäuses umgibt das Gehäuse. Beispielsweise kann das Volumen des Außenraum um ein Vielfaches, beispielsweise um einen Faktor von 10, 100, 1000 oder mehr größer sein als ein Volumen des Innenraumes des Gehäuses. Der Außenraum des Gehäuses kann beispielsweise ein Bereich eines Gebäudes sein, in welchem der gegenständliche Energiespeicheraufbewahrungsbehälter untergebracht ist. Der Außenraum kann insbesondere ein Kellerraum, ein Abstellraum, eine Garage, ein Hausanschlussraum oder dergleichen sein.

Der Abluftstutzen kann den Innenraum des Gehäuses fluidisch mit den Außenraum des Gehäuses verbinden. Ein Fluid kann folglich durch den Abluftstutzen aus dem Innenraum des Gehäuses in den Außenraum des Gehäuses und/oder in der umgekehrten Richtung durch den Abluftstutzen hindurchfließen.

Hier, im Vorangehenden und im Folgenden ist mit Fluid sowohl ein Gas und/oder eine Flüssigkeit umfasst. Wenn hier, im Vorangehenden und Folgenden davon die Rede ist, dass ein Fluid fließt oder strömt, ist davon das Fließen einer Flüssigkeit, das Strömen eines Gases und/oder eine Kombination hieraus, beispielsweise der Transport von in einem Gas getragenen Tröpfchen, umfasst.

Der Abluftstutzen ermöglicht einen Druckausgleich zwischen dem Innenraum und dem Außenraum des Gehäuses. Insbesondere im Falle eines entzündeten Energiespeichers, im sogenannten Brandfall, können Brandfluide aus dem Innenraum des Gehäuses durch den Abluftstutzen in den Außenraum des Gehäuses gelangen. Auf diese Weise wird vermieden, dass sich ein exzessiver Druck innerhalb des Gehäuses aufbaut und dieses beschädigt wird.

Der Abluftstutzen kann eine Innenöffnung aufweisen, welche im Innenraum des Gehäuses angeordnet ist. Ferner kann der Abluftstutzen eine Außenöffnung aufweisen, welche im Außenraum des Gehäuses angeordnet ist. Der Abluftstutzen kann beispielsweise ein Innenvolumen aufweisen. Das Innenvolumen kann sich von der Innenöffnungen zu der Außenöffnung und umgekehrt erstrecken. Durch den Abluftstutzen, insbesondere mittels dessen Innenvolumen, ist der Innenraum des Gehäuses mit dem Außenraum des Gehäuses fluidisch verbunden.

Der Abluftstutzen kann beispielsweise im Wesentlichen als ein Rohr gebildet sein. Der Querschnitt des Rohrs kann dabei beispielsweise im Wesentlichen rund sein. Andere Querschnitte, beispielsweise ein elliptischer, dreieckiger, viereckiger, polygoner und/oder anderweitig geformter Querschnitt ist ebenfalls möglich. Der Abluftstutzen kann insbesondere zumindest eine Wand aufweisen. Die Wand begrenzt das Innenvolumen des Abluftstutzens gegenüber seiner Umgebung.

Beispielsweise kann der Abluftstutzen einen veränderlichen Querschnitt haben. Insbesondere kann sich der Querschnitt entlang einer Längserstreckung des Abluftstutzens vergrößern. Die Längserstreckung kann sich beispielsweise von der Innenöffnung zur Außenöffnung des Abluftstutzens erstrecken. Beispielsweise kann der Abluftstutzen sich in Richtung ausgehend vom Innenraum des Gehäuses zu dem Außenraum des Gehäuses in zumindest einem Bereich vergrößern.

Der Abluftstutzen erstreckt sich insbesondere durch eine Wand des Gehäuses hindurch. Beispielsweise kann der Abluftstutzen dabei als ein Teil des Gehäuses geformt sein. Auch möglich ist es, dass der Abluftstutzen von dem Gehäuse separat ist. Der Übergang zwischen Gehäuse und Abluftstutzen ist insbesondere druckdicht und/oder fluiddicht.

Beispielsweise kann der Abluftstutzen geöffnet und/oder geschlossen werden. Wenn der Abluftstutzen geöffnet ist, verbindet er denn Innenraum und den Außenraum des Gehäuses. Wenn er geschlossen ist, tut er dies nicht. Für das Schließen und Öffnen des Abluftstutzens kann beispielsweise ein Ventil, beispielsweise ein Überdruckventil, eine Membran, insbesondere eine Berstscheibe, ein anderweitiger Verschluss und/oder Kombinationen hieraus vorgesehen sein. Beispielsweise kann der Abluftstutzen auch dauerhaft geöffnet sein.

Neben dem Abluftstutzen können noch weitere Verbindungen zwischen dem Innenraum und dem Außenraum vorliegen. Diese sind vorzugsweise für das in dem Gehäuse befindliche Fluid undurchdringlich. Beispielsweise können dies eine Kabeldurchführung für den Energiespeicher oder für Datenleitungen, ein Zulauf für ein Löschfluid und/oder anderweitige Verbindungen nach außen sein.

Auch kann neben dem Abluftstutzen gemäß einem Ausführungsbeispiel ein Abflussstutzen vorgesehen sein. Beispielsweise kann mit dem Abflussstutzen ein Abflusskanal verbunden sein, der beispielsweise ausgehend vom Abflussstutzen in das Gehäuse reicht.

Der Abflussstutzen kann in der Außenwand des Gehäuses angeordnet sein. Der Abflussstutzen kann an ein weiterführendes fluidführendes Element, beispielsweise außerhalb des Gehäuses, angeschlossen werden, beispielsweise kraftschlüssig oder formschlüssig, beispielsweise mittels eines Gewindes, welches beispielsweise am Abflussstutzen angeordnet ist.

Über den Abflussstutzen kann Fluid, insbesondere eine Flüssigkeit insbesondere Wasser, aus dem Gehäuse herausgeleitet werden. Insbesondere kann ein Löschfluid aus dem Gehäuse herausgeleitet werden. Hierfür ist eine fluidführende und insbesondere fluiddichte Verbindung zumindest mittelbar zu einem Zielvolumen wie beispielsweise einem Abwasserkanal, einem Gewässer, einem Auffangtank und/oder zu ähnlichen Zielvolumina vorgesehen. Da Fluid, insbesondere Wasser, das in direktem Kontakt mit einem beschädigten Energiespeicher stand, chemisch belastet sein kann, kann es ratsam sein, dass das Zielvolumen geschlossen ist, beispielsweise als ein Auffangtank.

Der Abflussstutzen kann mit einem Verschluss ausgestattet sein. Insbesondere kann ein Rückschlagventil in oder an dem Abfluss angeordnet sein, dass einen Rückfluss in den Container verhindert. Auch kann ein regulierbarer Verschluss vorgesehen sein. Beispielsweise kann ein Ventil den Abfluss, insbesondere den Abflussstutzen und/oder den Abflusskanal, verschließen und/oder offen halten. Das Ventil kann beispielsweise manuell bedienbar sein. Auch möglich ist es, das Ventil mittels eines Aktors, beispielsweise eines Motors, zu steuern.

Die Fluiddichtigkeit der Verbindung zwischen Abflussstutzen und Zielvolumen (beispielsweise ein Auffangtank) kann wie oben ausgeführt durch eine entsprechende Verbindung des Abflussstutzens mit einem daran anschließenden fluidführenden Element, beispielsweise einem Kanal, einem Rohr, einem Schlauch oder ähnlichem realisiert sein. Beispielsweise kann ein Schraubverschluss am Abflussstutzen vorgesehen sein und/oder ein kraftschlüssiger, formschlüssiger oder sonstiger Verschluss. Optional ist eine Dichtung am Abflussstutzen vorgesehen.

In einem Ausführungsbeispiel ist der Abflussstutzen in einem unteren Bereich des Gehäuses angeordnet. Hierdurch kann das Gehäuse zu einem Großteil, insbesondere (annähernd) vollständig geleert werden.

Gemäß einem Ausführungsbeispiel ist ein Zulauf für ein Löschfluid vorgesehen. Der Zulauf kann Löschfluid in den Innenraum führen. Ein Ventil am Abflussstutzen kann derart mit dem Zulauf gekoppelt sein, dass im Falle eines Zulaufs von Löschfluid das Ventil geöffnet wird, ansonsten das Ventil geschlossen ist.

Auch ist es möglich, dass nur ein Zulauf für ein Löschfluid vorgesehen ist, aber kein Abflussstutzen. Das Gehäuse kann also auch ablauf/abflussfrei ausgeführt sein. Insbesondere wurde erkannt, dass eine einmalige Flutung des Gehäuses mit einem Löschfluid bereits für eine erfolgreiche Brandbekämpfung ausreichen kann. Das Gehäuse kann bei einer Flutung (annähernd) vollständig mit Löschfluid gefüllt werden. Auch kann das Gehäuse nur teilweise gefüllt werden.

In einer Verwendungsart des offenbarten Energiespeicheraufbewahrungsbehälters wird in diesen einmalig ein Löschfluid eingeleitet, insbesondere durch den Zulauf für ein Löschfluid. Insbesondere wird kein Löschfluid aus dem Energiespeicheraufbewahrungsbehälter herausgeleitet.

Der Zulauf für ein Löschfluid kann eine fluidische Verbindung zwischen einem Außenraum des Gehäuses und dem Innenraum des Gehäuses herstellen. Beispielsweise kann ein fluidischer Hohlraum, beispielsweise ein Kanal, beispielsweise ein Rohr oder Schlauch den Außenraum mit dem Innenraum des Gehäuses verbinden. Auch kann der Zulauf für ein Löschfluid im Innenraum des Gehäuses angeordnet sein, beispielsweise vollständig.

Gemäß einem Ausführungsbeispiel ist das Löschfluid Wasser.

Insbesondere kann das Löschfluid Trinkwasser sein, auch kann das Löschfluid eine wässrige Lösung sein. Beispielsweise kann das Löschfluid als Salzwasser ausgeführt sein, beispielsweise als Meerwasser. Beispielsweise kann die wässrige Lösung einen Salzgehalt von zumindest 1%, 2%, 3%, 3,5%, 5%, 10%, 15%, 20%, 25% oder 30% Massenanteil aufweisen. Der Salzanteil des Löschfluids kann beispielsweise Natriumchlorid umfassen. Es wurde erkannt, dass eine wässrige Lösung mit einem der obigen Salzgehalte eine Entladung des Energiespeichers durch das Löschfluid begünstigen und die Entladung des Energiespeichers beschleunigen kann, sodass die gespeicherte potentielle Energie des Energiespeichers kontrolliert und räumlich verteilt abgegeben wird.

Gemäß einem Ausführungsbeispiel ist ein Reservoir für das Löschfluid vorgesehen, welches insbesondere mit dem Zulauf für Löschfluid fluidisch verbunden ist. Das Reservoir kann beispielsweise einen Fluidspeicher umfassen, wobei der Fluidspeicher beispielsweise als Tank, Flasche, Beutel und/oder Kombinationen hieraus ausgeführt sein kann. Beispielsweise kann das Reservoir und/oder der Fluidspeicher zumindest teilweise als ein Druckbehälter ausgeführt sein. Beispielsweise umfasst das Reservoir, insbesondere neben dem Fluidspeicher, eine druckerzeugende Komponente, beispielsweise einen Gasbehälter, beispielsweise eine Gasflasche, welcher unter Druck steht. Die druckerzeugende Komponente kann auch als eine Pumpe ausgeführt sein, oder als ein Teil des Reservoirs, insbesondere des Fluidspeichers, der sich höher als das Gehäuse und/oder der Zulauf für ein Löschfluid befindet und damit einen hydrostatischen Druck erzeugt. Die druckerzeugende Komponente ist beispielsweise mit dem Fluidspeicher fluidisch verbunden. Die druckerzeugende Komponente kann beispielsweise in einem Lagerungszustand keinen Druck auf das Fluid in dem Reservoir, insbesondere dem Fluidspeicher ausüben. In einem Befüllungszustand kann dann die druckerzeugende Komponente einen Druck auf das Löschfluid ausüben und es damit in das Gehäuse befördern. Ein Umschalten zwischen dem Lagerungszustand und dem Befüllungszustand kann beispielsweise mit einem Ventil, einem Schalter zur Energieversorgung einer Pumpe und/oder Kombinationen hieraus realisiert sein.

Gemäß einem Ausführungsbeispiel umfasst das Reservoir für das Löschfluid einen Druckbehälter, in dem Löschfluid unter Druck gelagert ist. Gemäß einem Ausführungsbeispiel umfasst das Reservoir für das Löschfluid einen Fluidspeicher, beispielsweise eine Flasche, und einen Gasspeicher, beispielsweise eine Gasflasche. Die Gasflasche kann geöffnet werden, sodass sie durch den Druck des Gases das Löschfluid aus dem Fluidspeicher in das Gehäuse treibt. Das Löschfluid kann hierbei insbesondere Wasser, insbesondere Salzwasser sein.

Der Energiespeicheraufbewahrungsbehälter umfasst zumindest eine in und/oder an dem Gehäuse angeordnete Zuführungsvorrichtung. Die Zuführungsvorrichtung mischt einem im Brandfall durch den Abluftstutzen aus dem Innenraum des Gehäuses in den Außenraum des Gehäuses fließenden Brandfluid ein Verdünnungsfluid bei. Beispielsweise ist die Zuführungseinrichtung dazu eingerichtet, einem im Brandfall durch den Abluftstutzen aus dem Innenraum des Gehäuses in den Außenraum des Gehäuses fließenden Brandfluid ein Verdünnungsfluid beizumischen. Die Zuführungseinrichtung kann beispielsweise zumindest ein geeignetes Steuerungsmittel umfassen, welches die Beimischung von Verdünnungsfluid zu einem Brandfluid im Brandfall auszulösen. Beispielsweise kann die Zuführungsvorrichtung ein Signal empfangen, welches indikativ für einen Brandfall ist. Beispielsweise kann die Zuführungseinrichtung auch selbst einen Brandfall detektieren, beispielsweise mittels eines Sensors.

Ein Brandfall liegt insbesondere dann vor, wenn eine in dem Energiespeicheraufbewahrungsbehälter angeordneter Energiespeicher überhitzt, selbst Feuer fängt und/oder zumindest ein Element seiner Umgebung in Brand setzt. In der Regel entstehen bei einem Brand eines Energiespeichers und/oder von ihm entzündeter Komponenten Brandfluide. Brandfluide umfassen insbesondere Gase, Rauch, Aerosole und oder Kombinationen hieraus. Brandfluide können sehr heiß und darüber hinaus toxisch, reizend, ätzend, umweltschädlich, übel riechend und/oder Kombinationen hieraus sein.

In einem Brandfall werden typischerweise Brandfluide in großer Menge freigesetzt. Die in einem Brandfall freigesetzten Brandfluide können durch den Abluftstutzen aus dem Innenraum des Gehäuses in den Außenraum entweichen. Hierdurch ergibt sich ein Volumenstrom von Brandfluiden durch den Abluftstutzen.

Es wurde unter anderem erkannt, dass die brandfluide insbesondere wegen ihrer hohen Konzentration an für Mensch, Tier und Gerät gefährlichen Inhaltsstoffen eine große Gefahr für die Umgebung des Energiespeicheraufbewahrungsbehälters darstellen.

Gegenständlich wird deshalb vorgeschlagen, dass die Zuführungsvorrichtung in einem Brandfall dem durch den Abluftstutzen in den Außenraum des Gehäuses gelangenden Brandfluid ein Verdünnungsfluid beimischt.

Die Zuführungsvorrichtung kann beispielsweise in dem Gehäuse angeordnet sein. Insbesondere kann die Zuführungsvorrichtung teilweise oder vollständig innerhalb des Gehäuses angeordnet sein.

Beispielsweise ist die Zuführungsvorrichtung an dem Gehäuse angeordnet. Die Zuführungsvorrichtung kann beispielsweise teilweise oder vollständig im Außenraum des Gehäuses angeordnet, beispielsweise an einer Wand des Gehäuses angeordnet sein.

Beispielsweise kann die Zuführungsvorrichtung mit dem Gehäuse, beispielsweise mit einer Wand des Gehäuses, fest verbunden sein, beispielsweise kraftschlüssig, formschlüssig und/oder stoffschlüssig. Auch kann die Zuführungsvorrichtung zumindest verliersicher mit dem Gehäuse verbunden sein.

Die Zuführungsvorrichtung kann beispielsweise zumindest teilweise mit dem Gehäuse integriert sein. Beispielsweise kann das Gehäuse eine Aufnahme für zumindest einen Teil der Zuführungsvorrichtung bereitstellen.

Damit, dass die Zuführungsvorrichtung einem Brandfluid eine Verdünnungsfluid beigemischt, ist insbesondere gemeint, dass die Zuführungsvorrichtung dem Brandfluid eine Verdünnungsfluid hinzufügt. Ferner kann von einer Beimischung umfasst sein, dass das Brandfluid und das Verdünnungsfluid miteinander vermischt werden, sodass sich ein im Wesentlichen homogenes Mischverhältnis zwischen dem Brandfluid und dem Verdünnungsfluid ergibt.

Beispielsweise kann die Zuführungsvorrichtung dazu eingerichtet sein, dem Abluftstutzen ein Verdünnungsfluid in einem Volumenstrom zuzuführen, welcher einem Vielfachen des Volumenstroms von Brandgasen, welches durch den Abluftstutzen fließt und/oder aus dem Energiespeicheraufbewahrungsbehälter dringen, entspricht. In anderen Worten kann in dem entstehenden Gemisch aus Brandfluid und Verdünnungsfluid das Verdünnungsfluid überwiegen. Beispielsweise kann die Zuführungsvorrichtung dazu eingerichtet sein, zumindest 2, 3, 4, 5, 10, 50, 100, 500 oder 1000 mal mehr Verdünnungsfluid pro Zeiteinheit bereitzustellen, als Brandfluid pro Zeiteinheit aus dem Energiespeicheraufbewahrungsbehälter dringt.

Die Zuführungsvorrichtung kann das Verdünnungsfluid abgeben. Beispielsweise kann die Zuführungsvorrichtung dazu eingerichtet sein, dass Verdünnungsfluid in dem Bereich des Abluftstutzens abgeben. Insbesondere kann die Zuführungsvorrichtung das Verdünnungsfluid innerhalb des Abluftstutzens abgeben. In diesem Fall gibt die Zuführungsvorrichtung des Verdünnungsfluid insbesondere direkt in den Abluftstutzen ab und nicht zunächst in den Innenraum des Gehäuses und von da in den Abluftstutzen.

Durch eine Abgabe des Verdünnungsfluides direkt in den Abluftstutzen wird erreicht, dass gezielt die aus dem Abluftstutzen austretenden Brandfluide mit dem Verdünnungsfluid vermischt und damit unschädlich gemacht werden. Auch wurde erkannt, dass durch die Vermischung der beiden Fluide (Brandfluid und Verdünnungsfluid) an dem Abluftstutzen eine möglichst homogenes Mischverhältnis erreicht wird. Würde das Verdünnungsfluid zunächst in den Innenraum des Gehäuses geleitet werden, kann nicht garantiert werden, dass zumindest in manchen Phasen des Brandfalls, insbesondere zu Anfang, hochkonzentrierte Brandfluide aus dem Abluftstutzen heraustreten. Zudem wurde erkannt, dass es durch eine Beimischung des Verdünnungsfluid in dem Abluftstutzen eine an den momentan austretenden Volumenstrom des Brandfluids angepasste Abgabe des Verdünnungsfluid erreicht werden kann. Hierdurch kann die Verdünnungswirkung des Verdünnungsfluid es auf das Brandfluid auch bei variabler Abgabemenge von Brandfluid über die Zeit konstant gehalten werden. Insbesondere kann die Zuführungsvorrichtung dazu eingerichtet sein, stets eine an den Volumenstrom von Brandfluiden angepasste momentane Menge an Verdünnungsfluid bereitzustellen.

Der Abluftstutzen kann, insbesondere ab der Position, an welcher das Verdünnungsfluid in den Abluftstutzen gelangt, eine Mindestlänge aufweisen. Die Mindestlänge kann beispielsweise das 2, 3, 4, 5, 10, 50, 100 oder 500-fache des Durchmessers des Abluftstutzens betragen. Auch kann die Mindestlänge beispielsweise 0,1, 0,2, 0,5, 1, 2, 5, 10, 20, 50 oder 100m betragen. Ein besonders langer Abluftstutzen, ab dem Eintrittsort des Verdünnungsfluids, führt zu einer besonders guten Durchmischung zwischen Verdünnungsfluid und Brandfluid.

Gemäß einem Ausführungsbeispiel kann die Zuführungsvorrichtung dazu eingerichtet sein, in von einem Brandfall verschiedenen Fällen, insbesondere in normalen Betriebsmodi, also in Situationen, in denen der Energiespeicher nicht überhitzt und/oder in Brand steht, kein Verdünnungsfluid abgeben.

Gemäß einem Ausführungsbeispiel umfasst der Abluftstutzen zumindest eine Zuführungsöffnung für die Zuführungsvorrichtung. Die Zuführungsöffnung ist insbesondere verschieden von der Innenöffnung und der Außenöffnung des Abluftstutzens. Der Abluftstutzen weist somit beispielsweise zumindest drei Öffnungen auf.

Beispielsweise kann die Zuführungsöffnung eine Öffnung in einer Wand des Abluftstutzens umfassen. Auch kann die Zuführungsöffnung zumindest einen Kragen oder Flansch umfassen. Beispielsweise kann die Zuführungsöffnung rohrförmig von zumindest einer Wandseite des Abluftstutzens abgehen. Auch kann die Zuführungsöffnung zu beiden, der inneren und der äußeren Wandseite, des Abluftstutzens von einem Kragen oder Flansch umgeben sein.

Die Zuführungsöffnung kann beispielsweise als ein Anschluss für die Zuführungsvorrichtung fungieren. Beispielsweise kann die Zuführungsöffnung mit einem Schlauch, einem Kanal, einem Rohr und/oder Kombinationen hieraus verbindbar und/oder verbunden sein. Insbesondere kann die Zuführungsvorrichtung fluidisch mit der Zuführungsöffnung und damit insbesondere mittels der Zuführungsöffnung mit dem Abluftstutzen verbindbar und/oder verbunden sein.

Auch kann die Zuführungsöffnung eine Öffnung in dem fluidführenden Element sein. Beispielsweise kann das fluidführende Element in diesem Falle in den Abluftstutzen geführt sein, beispielsweise in Form eines Rohrs, Schlauchs und/oder ähnlichem.

Die Zuführungsöffnung ist eine Öffnung, aus der ein Verdünnungsfluid austritt, insbesondere in den Abluftstutzen austritt. Ein Anschluss für die Zuführungsvorrichtung kann fluidisch mit der Zuführungsöffnung verbunden sein, sodass die Zuführungsvorrichtung das Verdünnungsfluid in den Abluftstutzen einbringt. Die Position der Zuführungsöffnung in dem Abluftstutzen ist dabei insbesondere konstant. Die Zuführungsöffnung bestimmt damit beispielsweise, wo in dem Abluftstutzen das Verdünnungsfluid dem Brandfluid beigemischt wird.

Die Zuführungsöffnung kann auch ein Teil der Zuführungseinrichtung sein.

Gemäß einem Ausführungsbeispiel ist die Zuführungsvorrichtung mit einem Verdünnungsfluidauslass fluidisch mit dem Abluftstutzen verbunden. Der Verdünnungsfluidauslass ist dabei Teil der Zuführungsvorrichtung.

Insbesondere ist die Zuführungsvorrichtung mit der Zuführungsöffnung fluidisch verbunden. Insbesondere kann diese Verbindung unmittelbar ausgeführt sein. Hiervon ist insbesondere gemeint, dass kein weiteres fluidführendes Element fluidisch zwischen dem Verdünnungsfluidauslass der Zuführungsvorrichtung und der Zuführungsöffnung angeordnet ist. Auch kann der Verdünnungsfluidauslass mit der Zuführungsöffnung übereinstimmen. Auch kann eine mittelbare Verbindung zwischen Verdünnungsfluidauslass und der Zuführungsöffnung vorgesehen sein.

Beispielsweise kann der Abluftstutzen in einem Bereich, welcher in Strömungsrichtung durch den Abluftstutzen hinter der Zuführungsöffnung liegt, eine geringere Querschnittsfläche aufweisen als ein Bereich, welcher in Strömungsrichtung vor der Zuführungsöffnung liegt. Hierdurch wird dem erhöhten Volumenstrom hinter der Zuführungsöffnung Rechnung getragen. Bei gleicher Fließgeschwindigkeit kann somit nach Passieren der Zuführungsöffnung ein höherer Volumenstrom erreicht werden.

Gemäß einem Ausführungsbeispiel kann der Abluftstutzen eine auf dem Bernoulli-Effekt basierende, von der Strömung des Verdünnungsfluids angetriebene Ansaugvorrichtung für das Brandfluid aufweisen.

Beispielsweise kann die Zuführungsöffnung zumindest einen Auslass innerhalb des Abluftstutzens umfassen, welcher eine Strömungsrichtung des Verdünnungsfluids bei Austritt aus der Zuführungsöffnung aus dem Auslass vorgibt, welche zumindest teilweise parallel zu der Erstreckungsrichtung des Abluftstutzens und/oder der Strömungsrichtung des Brandfluid innerhalb des Abluftstutzens ausgerichtet ist. Alternativ oder zusätzlich kann der Abluftstutzen eine Kammer umfassen, in welche das Verdünnungsfluid durch die Zuführungsöffnung einströmen kann. Die Kammer kann in Richtung der Strömungsrichtung des Brandfluids geöffnet sein und/oder entgegen der Richtung der Strömungsrichtung des Brandfluids geschlossen sein. Hierdurch wird eine Strömungsrichtung des Verdünnungsfluids in Richtung der Strömungsrichtung des Brandfluids vorgegeben.

Beispielsweise kann sich in Strömungsrichtung vor der Zuführungsöffnung, insbesondere vor der Kammer, eine Verengung des Abluftstutzens befinden. Die Eigenschaften einer Verengung des Abluftstutzens werden hierunter beschrieben. Durch ein Strömen des Verdünnungsfluid durch die Verengung ergibt sich ein Unterdruck. Durch den Unterdruck kann das Brandfluid angesogen werden. Hierdurch kann das Verdünnungsfluid das Brandfluid mittels des Bernoulli-Effekts ansaugen und sich mit dem Brandfluid vermischen. Besonders gut kann dies gelingen, wenn in dem Bereich der Verengung eine Öffnung zu einem Brandfluid führenden Bereich des Abluftstutzens angeordnet ist. Durch das Anordnen der Zuführungsöffnung in Strömungsrichtung hinter der Verengung wird das Brandfluid nicht nur durch den in dem Gehäuse entstehenden Druck aus dem Abluftstutzen heraus transportiert. Stattdessen wird durch die Zuführungsvorrichtung ein aktiver Transport des Brandfluids aus dem Gehäuse bewirkt. Auch können durch den aktiven Transport des Brandfluids mittels des Verdünnungsfluids besonders hohe Verdünnungsraten erreicht werden.

An dem Anschlussstutzen kann ein fluidführendes Element angeschlossen werden, welches das Brandfluid ausgehend von dem Abluftstutzen weitertransportiert. Beispielsweise kann das fluidführende Element ein Rohr, ein Schlauch, ein Schornstein, ein Kamin und/oder Kombinationen hieraus sein. Das fluidführende Element kann beispielsweise in die Umwelt geöffnet sein.

Beispielsweise können mehr als eine Zuführungsöffnung vorgesehen sein, insbesondere 2, 3, 4, 5, 10, 20 oder mehr. Beispielsweise können die Zuführungsöffnungen voneinander entlang der Strömungsrichtung beanstandet sein. Auch können die Zuführungsöffnungen im Wesentlichen an der gleichen Position entlang der Strömungsrichtung liegen und voneinander entlang des Umfanges des Querschnitts des Abluftstutzens voneinander beabstandet sein.

Der Verdünnungsfluidauslass ist beispielsweise als eine Öffnung, ein Rohr, ein Schlauch, ein Anschluss und/oder Kombinationen hieraus gebildet.

Gemäß einem Ausführungsbeispiel umfasst die Zuführungsvorrichtung und/oder der Abluftstutzen zumindest ein Vermischungsmittel. Ein Vermischungsmittel dient dazu, eine Fluid mit einem anderen Fluid zu vermischen. Beispielsweise kann ein Vermischungsmittel eine von einer laminaren Strömung abweichende Strömungsform hervorrufen, beispielsweise eine turbulente Strömung.

Das Vermischungsmittel kann insbesondere zumindest teilweise innerhalb des Abluftstutzens angeordnet sein. Das Vermischungsmittel kann beispielsweise in Strömungsrichtung vor einer Zuführungsöffnung angeordnet sen.

Beispielsweise kann ein Vermischungsmittel als eine Lamelle geformt sein, welche von Fluiden, welche durch den Abluftstutzen strömen, passiert werden muss. Beispielsweise kann die Lamelle von einer Wand des Abluftstutzens abgehen und eine Richtungsänderung des durch den Abluftstutzen strömenden Fluids verursachen. Auch kann ein Vermischungsmittel beispielsweise als ein Sieb, eine Schnecke, eine Verengung, eine Aufweitung, eine Ondulierung und/oder Kombinationen hieraus gebildet sein.

Durch das Vorsehen eines Vermischungsmittels wird eine besonders homogene Mischung aus Brandfluiden und dem Verdünnungsfluid erreicht.

Gemäß einem Ausführungsbeispiel umfasst die Zuführungsvorrichtung zumindest eine Verdünnungsfluidquelle.

Aus der Verdünnungsfluidquelle kann die Zuführungsvorrichtung Verdünnungsfluid beziehen.

Beispielsweise kann die Verdünnungsfluidquelle als ein Reservoir ausgeführt sein. Das Reservoir enthält insbesondere unter anderem Verdünnungsfluid. Auch kann das Reservoir im Wesentlichen ausschließlich Verdünnungsfluid enthalten. Das Reservoir kann beispielsweise als ein Druckbehälter, beispielsweise als eine Gaskartusche und/oder Gasflasche ausgebildet sein. Auch kann das Reservoir beispielsweise Edukte für eine Reaktion beinhalten, bei welcher das Verdünnungsfluid entsteht.

Das in dem Reservoir gespeicherte Fluidvolumen kann beispielsweise einem Vielfachen des Volumens des Innenraums des Gehäuses entsprechen. Hierbei ist insbesondere das Volumen des in dem Reservoir gespeicherten Verdünnungsfluid in einem unkomprimierten, ausgedehnten Zustand zu betrachten. Wenn das Reservoir beispielsweise eine Druckflasche ist, ist das in dem Reservoir gespeicherte Volumen als das Volumen angesehen werden, welches von dem in der Druckflasche gespeicherten Fluid im ausgedehnten Zustand eingenommen wird. Beispielsweise kann dieses gespeicherte Fluidvolumen zumindest das 10, 50, 100, 500, 1000, 5000 oder 10.000 fache des Volumens des Innenraums des Gehäuses betragen.

Die Verdünnungsfluidquelle kann auch eine Ansaugöffnung umfassen. Die Ansaugöffnung kann insbesondere die Zuführungsvorrichtung fluidisch mit der Umgebung des Energiespeicheraufbewahrungsbehälters verbinden. Durch das vorsehen einer Ansaugöffnung kann die Zuführungsvorrichtung die Umgebungsluft als Verdünnungsfluid verwenden.

Gemäß einem Ausführungsbeispiel ist der Verdünnungsfluidauslass mit der Verdünnungsfluidquelle in einem geöffneten Zustand der Zuführungsvorrichtung fluidisch verbunden. Im geöffneten Zustand kann damit ein Fluid, insbesondere das Verdünnungsfluid, von der Verdünnungsfluidquelle zu dem Verdünnungsfluidauslass strömen.

Gemäß einem Ausführungsbeispiel ist der Verdünnungsfluidauslass von der Verdünnungsfluidquelle in einem verschlossenen Zustand der Zuführungsvorrichtung fluidisch getrennt. In dem verschlossenen Zustand kann demnach kein Fluid ausgehend von der Verdünnungsfluidquelle zu dem Verdünnungsfluidauslass strömen.

Beispielsweise kann die Zuführungseinrichtung ein Ventil, eine Klappe, eine Pumpe, ein anderweitig zum Verschließen einer fluidischen Verbindung geeignetes Element und/oder Kombinationen hieraus umfassen. Dieses ermöglicht der Zuführungseinrichtung ein Umschalten von dem geöffneten Zustand in den verschlossenen Zustand und umgekehrt.

Die Zuführungsvorrichtung kann beispielsweise steuerbar sein. Insbesondere kann die Zuführungsvorrichtung und von dem geöffneten Zustand in den verschlossenen Zustand umschaltbar sein.

Gemäß einem Ausführungsbeispiel umfasst die Zuführungsvorrichtung einen Fluidantrieb.

Der Fluidantrieb ist insbesondere dazu eingerichtet, das Verdünnungsfluid zu dem Verdünnungsfluidauslass anzutreiben. Insbesondere ist der Fluidantrieb dazu eingerichtet, das Verdünnungsfluid ausgehend von der Verdünnungsfluidquelle zu der Zuführungsöffnung anzutreiben.

Ein Antreiben eines Fluids von einem ersten Bereich zu einem zweiten Bereich kann im vorliegenden Falle beispielsweise heißen, dass ein Volumenstrom ausgehend von dem ersten Bereich zu dem zweiten Bereich erreicht wird. Auch kann ein Antreiben bedeuten, dass ein Druckgefälle ausgehend von dem ersten Bereich zu dem zweiten Bereich gebildet wird. Das Druckgefälle kann einen Volumenstrom des Fluids von dem ersten Bereich zu dem zweiten Bereich verursachen.

Der Fluidantrieb kann beispielsweise ein aktiver Fluidantrieb sein. In diesem Fall nimmt der Fluidantrieb Energie auf, beispielsweise elektrische, thermische, kinetische, chemische und/oder potentielle Energie, beispielsweise aus einem Energiespeicher, und nutzt diese aufgenommene Energie zum Transport des Verdünnungsfluid. Ein aktiver Fluidantrieb kann beispielsweise eine Pumpe sein, beispielsweise eine elektrische/oder eine von einem Verbrennungsmotor angetriebene Pumpe.

Ein Fluidantrieb, insbesondere ein aktiver Fluidantrieb, kann beispielsweise auch von einem unter Druck stehenden Reservoir gebildet sein. Beispielsweise kann eine Gasflasche als ein aktiver Fluidantrieb angesehen werden. In diesem Fall fungiert das Reservoir selbst als Fluidantrieb.

Die Zuführungsvorrichtung und/oder der Energiespeicheraufbewahrungsbehälter kann auch einen passiven Transport des Verdünnungsfluid zu dem Abluftstutzen ermöglichen. Beispielsweise kann der Energiespeicheraufbewahrungsbehälter und/oder die Zuführungsvorrichtung dazu eingerichtet sein, dass das Verdünnungsfluid angetrieben von dem durch den Abluftstutzen strömenden Brandfluid aus der Zuführungsöffnung gesogen wird. Dies kann insbesondere basierend auf dem Bernoulli-Effekt gelingen.

Die Zuführungsvorrichtung und/oder der Energiespeicheraufbewahrungsbehälter kann folglich einen auf dem Bernoulli-Effekt basierenden Fluidantrieb bilden und/oder umfassen.

Gemäß einem Ausführungsbeispiel ist die Zuführungsöffnung im Bereich einer Verengung des Abluftstutzens angeordnet. Hier, im Vorangehenden und im Folgenden kann die Verengung insbesondere eine lokale Reduzierung des Querschnitts des Abluftstutzens darstellen. Die Verengung kann beispielsweise entlang einer Längserstreckung des Abluftstutzens und/oder entlang der Strömungsrichtung der Brandgase durch den Abluftstutzen eine graduelle Reduzierung bis zu einem Zentrum der Verengung mit minimalem Querschnitt umfassen. In der Strömungsrichtung vor dem Zentrum der Verengung kann eine Aufweitung des Abluftstutzens auf den Querschnitt des Abluftstutzens hinter der Verengung liegen.

Die Verengung bewirkt eine lokal erhöhte Fließgeschwindigkeit eines durch den Abluftstutzen fließenden Fluids, insbesondere Brandfluids. Die lokal erhöhte Fließgeschwindigkeit erzeugt gemäß dem Bernoulli-Effekt einen Bereich mit einem im Vergleich zu anderen Bereichen des Abluftstutzens reduziertem Druck in dem Abluftstutzen. Dieser Bereich liegt insbesondere in Strömungsrichtung eines Fluids durch den Abluftstutzen im Bereich des Zentrums der Verengung, insbesondere in Strömungsrichtung vor, insbesondere kurz vor der Verengung.

Die Zuführungsöffnung kann im Bereich der Verengung angeordnet sein. Insbesondere kann die Zuführungsöffnung in Strömungsrichtung, insbesondere in Strömungsrichtung kurz vor dem Zentrum der Verengung liegen. Wenn die Zuführungsöffnung kurz vor der dem Zentrum der Verengung liegt, kann dies bedeuten, dass die Zuführungsöffnung höchstens 1%, 5% 10%, 20%, 50% oder 100%, bevorzugt zwischen 20% und 80% eines Querschnitts des Abluftstutzens betragen, insbesondere eines Querschnitts vor der Verengung und/oder eines Querschnitts im Bereich der Verengung. Auch kann hierfür die Zuführungsvorrichtung höchstens 1mm, 2mm, 5mm, 1cm, 2cm oder 5cm, bevorzugt zwischen 1cm und 5cm in Strömungsrichtung vor dem Zentrum der Verengung liegen.

Dadurch, dass die Zuführungsöffnung in Strömungsrichtung vor dem Zentrum der Verengung liegt, fließt das Brandfluid zunächst durch die Verengung, wodurch sich der Druck lokal verringert, und erreicht dann die Zuführungsöffnung mit besonders geringem Druck.

Auch kann die Zuführungsöffnung im Wesentlichen im Zentrum der Verengung angeordnet sein.

Alternativ kann die Zuführungsöffnung in Strömungsrichtung hinter der Verengung angeordnet sein. Dies kann insbesondere vorteilhaft sein, wenn das Brandfluid mittels des Verdünnungsfluid, insbesondere unter Nutzung des Bernoulli-Effekts aus dem Innenraum des Gehäuses herausgezogen werden soll.

Wenn hier, im Vorangehenden und im Folgenden von einem ersten Element die Rede ist, welches in Strömungsrichtung vor einem zweiten Element angeordnet ist, ist damit gemeint, dass ein Partikel, welcher in Strömungsrichtung beide Elemente passiert, zuerst das zweite Element erreicht und danach das erste Element.

Vor und/oder hinter der beschriebenen Verengung des Abluftstutzens kann zumindest eine weitere Verengung vorgesehen sein.

Die Strömungsrichtung eines Fluids durch den Abluftstutzen, insbesondere des Brandfluids, ist hierbei insbesondere ausgehend von dem Innenraum des Gehäuses zu dem Außenraum des Gehäuses gerichtet.

Gemäß einem Ausführungsbeispiel umfasst die Zuführungseinrichtungen zumindest eine Kühlvorrichtung.

Die Kühlvorrichtung ist insbesondere dazu eingerichtet, zumindest einen Teil des Verdünnungsfluid zu kühlen und/oder abzukühlen. Ein Kühlen kann beispielsweise auch ein Verhindern einer Aufwärmung umfassen.

Beispielsweise ist die Kühlvorrichtung dazu eingerichtet, dass in den Abluftstutzen strömende Verdünnungsfluid abzukühlen. Beispielsweise kann die Kühlvorrichtung dazu eingerichtet sein, das Reservoir zu kühlen. Beispielsweise kann die Kühlvorrichtung dazu eingerichtet sein, nur das in Richtung des Abluftstutzens strömende Löschfluid zu kühlen.

Die Kühlvorrichtung kann beispielsweise aktiv ausgeführt sein. Hierfür kann beispielsweise ein Peltier-Element, ein Kompressor und/oder Vergaser, ein anderes kälteerzeugendes Element und/oder eine Kombinationen hieraus vorgesehen sein.

Die Kühlvorrichtung kann beispielsweise auch durch das Reservoir selbst realisiert werden. Beispielsweise kann ein unter Druck stehendes Reservoir beim Austreten des in ihm enthaltenden Verdünnungsfluids allein schon durch das Ausdehnen des Verdünnungsfluids beim Austreten eine Kühlung verursachen. Die Kühlvorrichtung kann in dem Fall beispielsweise eine thermisch isolierende Ummantelung zumindest eines Teils der Zuführungsvorrichtung umfassen. Die thermische Isolierung kann verhindern, dass das bereits abgekühlte Verdünnungsfluid durch die Umgebung wieder aufgewärmt wird. Das Reservoir kann folglich selbst als Kühlvorrichtung fungieren.

Gemäß einem Ausführungsbeispiel kann das Verdünnungsfluid ein Gas sein. Beispielsweise kann das Verdünnungsfluid ist teilweise oder auch im Wesentlichen vollständig aus Luft gebildet sein. Im Wesentlichen vollständig kann hierbei meinen, dass zumindest 85%, 90%, 95% oder 99%, bevorzugt 85% bis 99% des Volumens des Verdünnungsfluid durch Luft gebildet sind. Beispielsweise kann die Luft aus der Umgebung des Energieaufbewahrungsbehälters stammen. Beispielsweise kann dies die Raumluft eines den Energiespeicheraufbewahrungsbehälter umgebenden Raums sein. Auch kann die Luft beispielsweise Außenluft sein. Dies kann etwa in dem Fall vorliegen, in welchem die Verdünnungsfluidquelle eine außerhalb von Gebäuden angeordnete Ansaugöffnung umfasst. Auch kann zumindest ein Teil und/oder das im Wesentlichen vollständige Verdünnungsfluid aus einem oder mehreren inerten Gasen gebildet sein, beispielsweise Stickstoff. Das Verdünnungsfluid kann auch beispielsweise zumindest teilweise oder vollständig aus Sauerstoff gebildet sein, aus Kohlendioxid und/oder Kombinationen hieraus. Insbesondere wurde erkannt, dass eine Beimischung mit einem reaktiven Gas wie Sauerstoff möglich ist, weil die Brandgase üblicherweise keine an sich entzündlichen Bestandteile mehr enthalten. Die Oxygenierung der Umgebung des Energiespeicheraufbewahrungsbehälters reduziert ferner die chemischen Gefahren für Lebewesen, welche von den Erstickungsgasen eines entzündeten Energiespeichers ausgehen. Zur besonders starken Reduzierung der Brandgefahr können reaktionshemmende Gase wie Stickstoff oder Kohlendioxid als Verdünnungsfluide vorteilhaft sein.

Gemäß einem Ausführungsbeispiel weist der Energiespeicheraufbewahrungsbehälter, insbesondere der Abluftstutzen, einen Fluidbrecher auf. Ein Fluidbrecher ist ein Element, welches die Gefährlichkeit der durch ihn passierenden Fluide für die Umgebung reduziert. Beispielsweise kann ein Fluidbrecher als ein Filter, insbesondere ein Filter für Gase, ausgeführt sein. Der Filter kann beispielsweise ein elektrostatischer Filter, ein Aktivkohlefilter ein katalysatorbasierter Filter und/oder Kombinationen hieraus umfassen. Der Fluidbrecher kann ebenfalls als eine Flammenfalle ausgeführt sein. Eine Flammenfalle kann beispielsweise eine Verengung und/oder Umlenkung eines fluidführenden Kanals, insbesondere des Abluftstutzens umfassen. Der Fluidbrecher kann auch beispielsweise einen Siphon umfassen. Der Siphon ist hierbei insbesondere durch einen Verlauf eines Kanals, beispielsweise des Abluftstutzens, gekennzeichnet, welcher ein lokales Minimum aufweist, in welchem sich beispielsweise eine Flüssigkeit sammeln kann, welche den gesamten Querschnitt des Kanals einnimmt.

Der Fluidbrecher kann insbesondere in Strömungsrichtung hinter der Zuführungsöffnung angeordnet sein. Wenn ein Brandfluid durch den Abluftstutzen strömt, passiert es damit zuerst den Fluidbrecher und erst danach die Zuführungsöffnung. Dies hat den Effekt, dass die Zuführungsvorrichtung dem bereits durch den Fluidbrecher in seiner Gefährlichkeit abgeschwächten Brandfluid das Verdünnungsfluid zuführen kann. Somit ergibt sich eine zweistufige Milderung des Brandfluides durch die gegenständliche Lösung. Die Schutzwirkung wird somit erhöht. Auch wird die Effizienz der Verdünnungsfluidbeimischung verglichen mit einer Lösung ohne Fluidbrecher erhöht.

Gemäß einem Ausführungsbeispiel umfasst der Energiespeicheraufbewahrungsbehälter zumindest einen Sensor.

Der Sensor ist dazu eingerichtet, zumindest einen Messwert zu erfassen. Der Messwert ist insbesondere indikativ für eine physikalische Größe innerhalb des Gehäuses. Die physikalische Größe kann beispielsweise einen in dem Energiespeicheraufbewahrungsbehälter angeordneten Energiespeicher betreffen. Wenn ein Messwert indikativ für eine physikalische Größe ist, erlaubt der Messwert einen Rückschluss auf den tatsächlichen Wert der physikalischen Größe. Beispielsweise kann ein Temperatursensor einen Widerstandsdraht umfassen, dessen Widerstandswert mit der Temperatur korreliert. Der Messwert kann in diesem Falle beispielsweise der Widerstandswert, welcher über den temperaturabhängigen Widerstand gemessen wird, umfassen. Dieser ist indikativ für die Temperatur.

Beispielsweise kann der Sensor ein Temperatursensor, ein Gassensor, ein Feuchtigkeitssensor, ein Rauchdetektor, ein optischer Sensor, insbesondere eine Kamera und/oder eine Lichtschranke, ein Drucksensor, ein Spannungssensor und/oder Kombinationen hieraus umfassen.

Der Sensor ist insbesondere dazu eingerichtet, einen bevorstehenden und/oder vorliegenden Brandfall anhand des zumindest einen Messwert zu detektieren. Mittels des Sensors kann folglich detektiert werden, ob der Energiespeicher entzündet ist oder nicht.

Der Sensor und/oder eine damit verbundene Sensorsteuereinrichtung kann beispielsweise ein Signal ausgeben, sobald der Brandfall vorliegt. Beispielsweise kann der Sensor und/oder eine damit verbundene Sensorsteuereinrichtung ein elektrisches, optisches, akustisches, und/oder anderweitiges Signal ausgeben. Das Signal kann beispielsweise an eine Steuerungseinrichtung gerichtet sein, insbesondere eine elektronische Steuerungseinrichtung. Beispielsweise kann der Sensor und/oder eine damit verbundene Sensorsteuereinrichtung im Brandfall ein Überwachungssystem, beispielsweise ein Überwachungssystem eines Gebäudes, mittels des Signals über einen Brandfall des Energiespeichers informieren. Auch kann das Signal an einen Signalgeber gerichtet sein. Der Signalgeber kann beispielsweise außen an dem Energiespeicheraufbewahrungsbehälter angeordnet sein. Der Signalgeber kann beispielsweise in Form eines Leuchtmittels und/oder eines Tongebers, insbesondere eines Lautsprechers, auf einen Brandfall aufmerksam machen, sobald er das Signal von dem Sensor oder einer damit verbundenen Sensorsteuereinrichtung empfängt.

Der Sensor kann beispielsweise mit der Zuführungsvorrichtung verbunden sein. Beispielsweise kann der Sensor im Brandfall ein Signal an die Zuführungsvorrichtung übermitteln. Die Zuführungseinrichtung kann also insbesondere dazu eingerichtet sein, von einem Sensor, insbesondere von dem Sensor, ein Signal zu erhalten, insbesondere ein Signal, welches indikativ für einen Brandfall ist. Die Zuführungseinrichtung kann dazu eingerichtet sein, in Abhängigkeit von dem Signal einem durch den Abluftstutzen strömenden Brandfluid ein Verdünnungsfluid beizumischen.

Gemäß einem Ausführungsbeispiel umfasst der Energiespeicheraufbewahrungsbehälter zumindest eine Steuerungseinrichtung. Die Steuerungseinrichtung ist insbesondere zumindest unter anderem dazu eingerichtet, die Zuführungsvorrichtung zu steuern. Beispielsweise kann die Steuerungseinrichtung die Zuführungsvorrichtung in Abhängigkeit von zumindest einem von dem zumindest einen Sensor erfassten Messwert steuern.

Der Sensor kann dazu eingerichtet sein, basierend auf einem von ihm erfassten Messwert ein Signal zu senden, beispielsweise an die Steuerungseinrichtung und/oder an die Zuführungseinrichtung. Auch kann beispielsweise die Steuerungseinrichtung und/oder die Zuführungseinrichtung einen Messwert von dem Sensor auslesen. Die Steuerungseinrichtung und/oder die Zuführungseinrichtung muss den Messwert selbst nicht empfangen, damit die Steuerung auf dem Messwert basieren kann. Gleichwohl kann in manchen Ausführungen die Steuerungseinrichtung und/oder die Zuführungseinrichtung den Messwert empfangen.

Die Steuerungseinrichtung kann beispielsweise dazu eingerichtet sein, die Zuführungsvorrichtung in den verschlossenen Zustand und/oder in den geöffneten Zustand zu steuern, insbesondere beispielsweise die Zuführungsvorrichtung von dem verschlossenen in den geöffneten Zustand zu überführen oder umgekehrt. Auch kann beispielsweise die Steuerungseinrichtung dazu eingerichtet sein, den Fluidantrieb der Zuführungseinrichtung zu steuern, insbesondere anzuschalten und/oder auszuschalten.

Auch kann die Zuführungseinrichtung selbst dazu eingerichtet sein, ihren Zustand (geöffnet oder verschlossen) und/oder ihren Fluidantrieb zu steuern.

Der Sensor kann mit der Steuerungseinrichtung und/oder der Zuführungseinrichtung verbunden sein, insbesondere unmittelbar und/oder über zumindest ein weiteres Element. Beispielsweise kann der Sensor eine eigene Sensorsteuereinrichtung umfassen, mittels derer die Steuerungseinrichtung und/oder die Zuführungseinrichtung von dem Sensor zumindest einen Messwert empfängt. Die Verbindung kann insbesondere drahtgebunden und/oder drahtlos ausgeführt sein.

Die Zuführungsvorrichtung kann mit der Steuerungseinrichtung und/oder der Zuführungseinrichtung verbunden sein, beispielsweise kabelgebunden und/oder kabellos. Die Verbindung kann beispielsweise über zumindest ein Kabel und/oder über einen Datenbus realisiert sein.

Beispielsweise kann der Sensor einen Messwert erfassen. Anhand des Messwerts können der Sensor, Sensorsteuereinrichtung, die Steuerungseinrichtung und/oder die Zuführungseinrichtung einen Brandfall detektieren. In diesem Fall kann die Steuerungseinrichtung basierend auf dem erfassten Messwert eine Steuerungseinrichtung die Zuführungsvorrichtung ansteuern und/oder die Zuführungseinrichtung kann selbst eine entsprechende Steuerung vornehmen. Beispielsweise kann die Steuerungseinrichtung und/oder die Zuführungseinrichtung den Fluidantrieb der Zuführungsvorrichtung im Brandfall einschalten.

Die Zuführungsvorrichtung kann auch selbst dazu eingerichtet sein, einen Brandfall zu detektieren, beispielsweise mittels eines Sensors. Hierfür muss also keine separate Steuerungsvorrichtung vorgesehen sein. Auch kann die Steuerungsvorrichtung Teil der Zuführungsvorrichtung sein.

Die Steuerungseinrichtung kann insbesondere außen an dem Gehäuse angeordnet sein. Insbesondere kann die Steuerungseinrichtung von dem Innenraum des Gehäuses getrennt sein. Beispielsweise ist das Gehäuse, insbesondere die Gehäusewand, im Bereich der Steuerungseinrichtung verstärkt und/oder thermisch isoliert. Auch kann die Steuerungseinrichtung mit der Zuführungseinrichtung integriert sein.

Bei dem Verfahren wird zunächst einen Brandfall detektiert. Insbesondere wird mittels des zumindest einen Sensors des Energiespeicheraufbewahrungsbehälters ein Brandfall detektiert. Beispielsweise erfasst der Sensor einen Messwert. Der Messwert kann darauf hindeuten, dass sich der Energiespeicher in einem kritischen Zustand, beispielsweise kurz vor oder bereits in einem entzündeten Zustand befindet.

Nachdem ein Brandfall detektiert worden ist, umfasst das Verfahren eine ansteuern der Zuführungsvorrichtung. Insbesondere ein Ansteuern der Art, dass einem durch den Abluftstutzen geführten Brandfluid ein Verdünnungsfluid beigemischt wird. Insbesondere wird dem Brandfluid mittels der Zuführungsöffnung ein Verdünnungsfluid beigemischt.

Das Verdünnungsfluid wird insbesondere direkt in den Abluftstutzen eingeströmt, insbesondere nicht zuerst in den Innenraum des Gehäuses und von dort mittelbar in den Abluftstutzen.

Das Verfahren kann insbesondere von einer Steuerungseinrichtung des Energiespeicheraufbewahrungsbehälters durchgeführt werden.

Das Verfahren kann ferner ein Fluten des Energiespeicheraufbewahrungsbehälters, insbesondere des Gehäuses, insbesondere des Innenraums des Gehäuses, im Brandfall umfassen. Bei der Flutung wird ein Löschfluid, beispielsweise Wasser, in den Energiespeicheraufbewahrungsbehälter eingeleitet, insbesondere durch einen Anschluss für Löschfluid, beispielsweise aus einem Reservoir für Löschfluid. Beispielsweise kann eine kontinuierliche oder intermittierende Flutung vorgesehen sein, bei der ein über einen Zeitraum von zumindest 5 min, 10 min, 20min, 40min, 1h, 2h, 5h, 10h, 24h, 2d, 4d, oder einer Woche Löschfluid zugeleitet wird. Überschüssiges Löschfluid kann aus dem Energiespeicheraufbewahrungsbehälter abfließen, beispielsweise über einen Abflussstutzen. Auch kann Löschfluid durch die hohen Temperaturen des entzündeten Energiespeichers verdampfen, und beispielsweise durch den Abluftstutzen entweichen.

Gemäß einem Ausführungsbeispiel umfasst das Verfahren eine einmalige Füllung des Energiespeicheraufbewahrungsbehälters mit Löschfluid. Ein Abfließen des Löschfluids ist in dieser Ausführung nicht vorgesehen.

Der Energiespeicheraufbewahrungsbehälter kann folglich eine Steuerungseinrichtung umfassen, welche dazu eingerichtet ist, die folgenden Schritte zu steuern und/oder auszuführen:
- Detektieren eines Brandfalls, insbesondere mittels des zumindest einen Sensors des Energiespeicheraufbewahrungsbehälters, danach
- Ansteuern der Zuführungsvorrichtung derart, dass einem durch den Abluftstutzen geführten Brandfluid ein Verdünnungsfluid beigemischt wird, insbesondere mittels der Zuführungsöffnung.

Nachfolgend wird der Gegenstand anhand einer Ausführungsbeispiele zeigenden Zeichnung näher erläutert. In der Zeichnung zeigen:
- Fig. 1: ein Energiespeicheraufbewahrungsbehälter gemäß einem Ausführungsbeispiel;
- Fig. 2a-e: Abluftstutzen und Zuführungsvorrichtungen gemäß Ausführungsbeispielen;
- Fig. 3: ein Verfahren zum Betrieb eines Energiespeicheraufbewahrungsbehälters gemäß einem Ausführungsbeispiel.

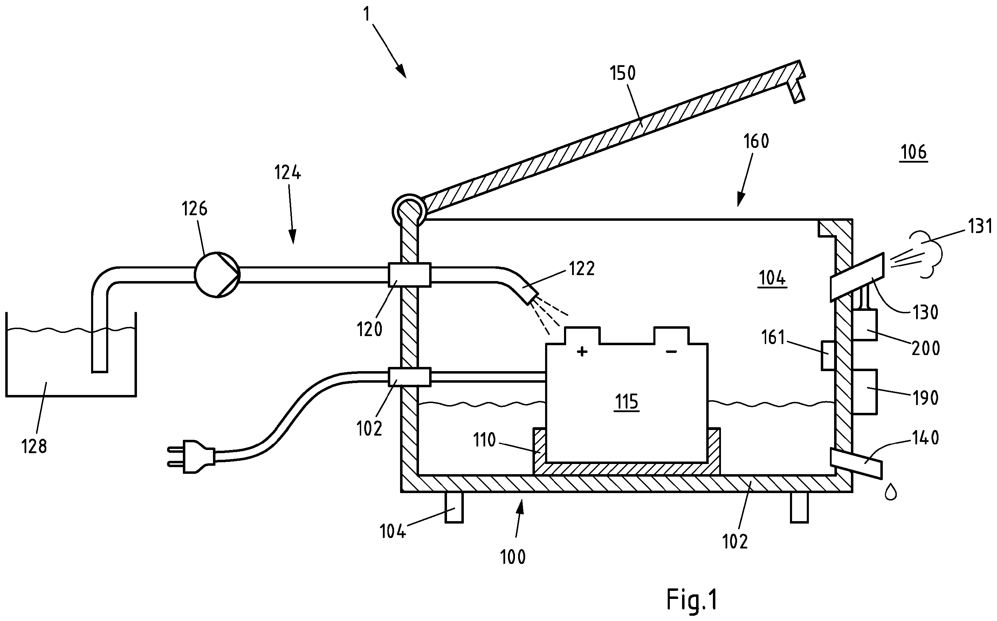

Fig. 1 zeigt einen gegenständlichen Energiespeicheraufbewahrungsbehälter 1 gemäß einem Ausführungsbeispiel. Dieser umfasst ein Gehäuse 100 mit einer Öffnung 160. Die Öffnung 160 kann von einem Verschluss 150 verschlossen werden. Insbesondere kann dieser Verschluss 150 das Gehäuse 100 druckdicht oder fluiddicht, insbesondere gasdicht und/oder flüssigkeitsdicht abschließen. In manchen Ausführungen ist der Verschluss 150 durch einen steuerbaren Aktor zwischen offener und geschlossener Position einstellbar.

Das Gehäuse 100 weist einen Anschlussstutzen 120 und einen Anschlusskanal 122 auf, der zur Aufnahme 110 führt. Durch den Anschlusskanal 122 kann ein Löschfluid hin zur Aufnahme 110 geleitet werden. Der Anschlussstutzen 120 ist mit einer Fluidversorgung 124 verbunden, die im gezeigten Beispiel eine Pumpe 126 umfasst, welche Fluid aus einem Löschreservoir 128 pumpt.

An dem Gehäuse 100 sind Füße 104 angeordnet. Diese können der thermischen Isolation des Gehäuses 100 dienen und/oder dessen Befestigung an der Umgebung. Zum Ablassen von Fluid aus dem Gehäuse 100 ist ein Abflussstutzen 140 vorgesehen. Des Weiteren ist eine Kabeldurchführung 102 für in die Außenwand des Gehäuses 100 eingelassen. Durch diese kann insbesondere druck-, gas- und/oder flüssigkeitsdicht ein Kabel zu dem Energiespeicher 115 geführt werden.

An dem Gehäuse 100 befindet sich ein Abluftstutzen 130. Durch den Abluftstutzen 130 können Brandfluide 131 aus dem Gehäuse 100 entweichen. Beispielsweise können Brandfluide 131 hohe Temperaturen aufweisen und beispielsweise Gase, Dampf, Rauch und ähnliches umfassen.

Ferner zeigt Figur 1 eine Zuführungsvorrichtung 200. Die Zuführungsvorrichtung 200 ist mit dem Abluftstutzen 130 fluidisch verbunden. Auf diese Weise können Fluide, insbesondere Gase, von der Zuführungsvorrichtung 200 zu dem Abluftstutzen 130 strömen. Somit kann das aus dem Abluftstutzen strömende Brandfluid 131 verdünnt werden.

Das Gehäuse 100 umfasst zumindest eine Wand 102. Das Gehäuse schließt, insbesondere mittels der Wand 102, einen Innenraum 104 ein. Der Innenraum 104 ist durch die Wand 102 von dem Außenraum 106 des Gehäuses 100 getrennt.

In oder an dem Gehäuse 100 kann ein Sensor 161 angeordnet sein. Der Sensor 161 kann insbesondere ein Temperatursensor, ein Gassensor, ein Rauchsensor, und/oder ein optischer Sensor sein. Mittels des Sensors 161 kann der Innenraum des Gehäuses 100 überwacht werden. Insbesondere kann ein Zustand des Energiespeichers 115 mittels des Sensors 161 überwacht werden. Der Sensor 161 kann insbesondere dazu dienen, einen Brandfall des Energiespeichers 115 zu detektieren.

Auch kann eine Steuerungseinrichtung 190 an dem Gehäuse 100 vorgesehen sein. Diese kann Messwerte auswerten, welche von dem Sensor 161 aufgenommen werden, und Aktoren betätigen. Insbesondere kann die Steuerungseinrichtung 190 die Zuführungseinrichtungen 200 steuern. Die Steuerungseinrichtung 190 kann insbesondere basierend auf zumindest einem Messwert, welche von dem Sensor 161 erfasst wird, eine Steuerung der Zuführungseinrichtung 200 vornehmen.

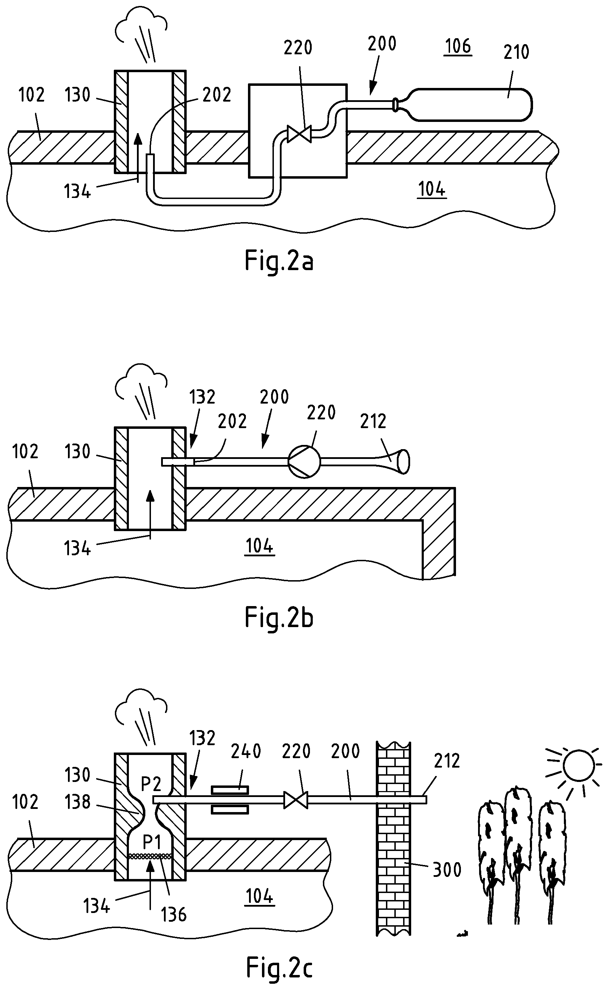

Figuren 2a-e zeigen beispielhafte Ausführungen des Abluftstutzens 130 in Verbindung mit einer Zuführungsvorrichtung 200.

In Figur 2a ist ein Abluftstutzen 130 gezeigt, welcher durch eine Wand 102 des Gehäuses 100 verläuft. Die Wand 102 trennt den Innenraum 104 des Gehäuses 100 von Außenraum 106 des Gehäuses 100. Ausgehend von dem Innenraum 104 des Gehäuses 100 zu dem Außenraum 106 des Gehäuses 100 verläuft eine Strömungsrichtung 134 durch den Abluftstutzen 130. Die gezeigte Zuführungsvorrichtung 200 umfasst ein Reservoir 210. In dem Reservoir 210 kann ein Verdünnungsfluid gespeichert sein. Beispielhaft ist eine Gasdruckflasche gezeigt, welche als Reservoir 210 fungiert. Die Zuführungseinrichtung 200 weist darüber hinaus einen Verdünnungsfluidauslass 202 auf. Der Verdünnungsfluidauslass 202 ist innerhalb des Abluftstutzens 130 angeordnet.

Auf diese Art und Weise kann die Zuführungsvorrichtung 200 das Verdünnungsfluid in den Abluftstutzen 130 injizieren.

Auch kann der Verdünnungsfluidauslass 202 in dem gezeigten Ausführungsbeispiel mit der Zuführungsöffnung bezeichnet werden, wenn der dahin führende Kanal dem Abluftstutzen 130 zugerechnet wird. Die Zuführungsvorrichtung umfasst ein Ventil 220, welches den Volumenstrom des Verdünnungsfluid ausgehend von dem Reservoir 210 zu dem Abluftstutzen 230 kontrollieren kann. Durch das Ventil 220 kann die Zuführungsvorrichtung 200 von einem geöffneten Zustand in einen verschlossenen Zustand überführt werden und umgekehrt.

Figur 2b zeigt eine beispielhafte Ausführungsform des Abluftstutzens 130. Bei dieser ist in einer Wand des Abluftstutzens 130 eine Zuführungsöffnung 132 vorgesehen. Die Zuführungsöffnung 132 kann insbesondere einen Kanal, welcher sich durch die Wand des Abluftstutzens 130 erstreckt, umfassen. Die Zuführungsöffnung 132 kann dabei insbesondere mit der innenseitigen Öffnung des Kanals in dem Abluftstutzen 130 bezeichnet werden. Für die Zuführungsöffnung 132 können über die Wand hinausragende Elemente vorgesehen sein, beispielsweise beidseitige, rohrförmige Kragen.

Die Zuführungsvorrichtung 200 ist mit der Zuführungsöffnung 132 verbunden. Hierfür ist ein Verdünnungsfluidauslass 202 vorgesehen. In der gezeigten Ausführungsform umfasst die Verdünnungsvorrichtung 200 ferner eine Pumpe 220.

Die Verdünnungsfluidquelle, welche in Figur 2a durch das Reservoir 210 gebildet war, kann auch als eine Ansaugöffnung 212 geformt. Die Ansaugöffnung 212 kann dazu dienen, die Umgebungsluft des Gehäuses 100 anzusaugen. Die Pumpe 220 ist insbesondere dazu eingerichtet, ein gasförmiges Fluid anzusaugen und mit einem Druck in den Abluftstutzen 130 zu pumpen.

Figur 2c zeigt eine weitere Ausführungsform, in welcher der Abluftstutzen 130 eine Verengung 138 umfasst. Durch die Verengung wird in einem Bereich in und/oder nach der Verengung ein Druck p2 vorliegen, welcher geringer ist, als der Druck vor der Verengung p1. Auf diese Art und Weise lässt sich ein Unterdruck im Bereich der Verengung 138 erzeugen. Wird nun wie in Figur 2c gezeigt, die Zuführungsöffnung 132 im Bereich der Verengung 138, insbesondere in Strömungsrichtung 134 vor der Verengung 138 angeordnet, kann durch den Unterdruck aus der Zuführungseinrichtungen 200 das Verdünnungsfluid herausgesaugt werden.

Figur 2c zeigt auch einen Fluidbrecher 136. Dieser kann beispielsweise als ein Filter, eine Flammenfalle, ein Sieb oder ähnliches ausgeführt sein und kann die aus dem Innenraum 104 des Gehäuses 100 dringenden Brandgase weniger gefährlich für die Umwelt machen.

Ferner zeigt Figur 2c eine Kühlvorrichtung 240. Mittels der Kühlvorrichtung 240 kann ein Verdünnungsfluid, welches aus der Zuführungsvorrichtung 200 in den Abluftstutzen 230 geführt wird, gekühlt werden. Hierdurch kann die Gefährlichkeit der austretenden Brandgase weiter reduziert werden.

Auch zeigt Figur 2c, dass über die Ansaugöffnung 212 mittels fluidführender Elemente Gase aus der Umwelt entnommen werden können. Beispielsweise kann ein fluidführendes Element der Zuführungseinrichtung 200 die Mauer 300 eines Gebäudes durchdringen und Außenluft ansaugen.

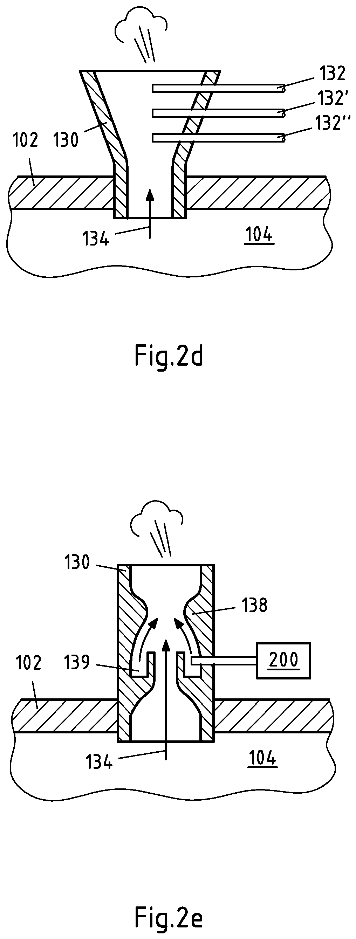

Ein weiteres Ausführungsbeispiel gemäß Figur 2d zeigt einen Abluftstutzen 130, welcher mehrere Zuführungsöffnung in 132, 132', 132" aufweist. Die Zuführungsöffnungen 132, 132', 132" sind in Strömungsrichtung 134 voneinander beanstandet. Auch ist gezeigt, dass sich der Abluftstutzen 130 in Strömungsrichtung 134 in seinem Querschnitt vergrößert. Hierdurch kann verhindert werden, dass durch das Zuführen von Verdünnungsfluid durch die Zuführungsöffnung in 132, 132', 132" ein der Strömung entlang der Strömungsrichtung 134 entgegen gerichtetes Druckgefälle entsteht.

Figur 2c zeigt ein Ansaugen von einem ersten Fluid (dort das Verdünnungsfluid) durch die Strömung eines zweiten Fluids (dort das Brandfluid). Dieses Prinzip kann auch andersherum genutzt werden, sodass die Strömung des Verdünnungsfluides das Brandfluid ansagt. Eine solche Anordnung ist in Figur 2e gezeigt.

In Fig. 2e umfasst der Abluftstutzen 130 eine Kammer 139, welche eine Öffnung aufweist, die in Strömungsrichtung 134 ausgerichtet ist. Die Kammer ist entgegen der Strömungsrichtung 134 geschlossen. Zudem ist eine Verengung 138 Strömungsrichtung hinter der Kammer 139 angeordnet. Wird nun von der Zuführungsvorrichtung 200 das Verdünnungsfluid in die Kammer 139 eingeführt, strömt dieses im Strömungsrichtung 134 (in Figur 2e nach oben) in Richtung der Verengung 138. Aufgrund des Bernoulli-Effekts wird ein Unterdruck im Bereich der Verengung 138 erzeugt. Auf diese Art und Weise wird das Brandfluid aus dem, dem Innenraum 104 des Gehäuses 100 zugewandten Teil des Abluftstutzens 130 in Richtung der Verengung 138 gesogen und von dort, gemeinsam mit dem Verdünnungsfluid, weitertransportiert und gemischt.

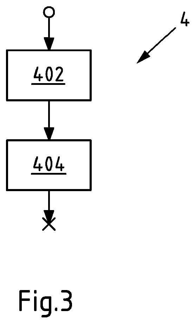

Figur 3 zeigt ein Flussdiagramm eines beispielhaften Verfahrens 4 zum Betreiben eines Energiespeicheraufbewahrungsbehälters 100.

In Schritt 402 wird ein Brandfall detektiert. Dies gelingt insbesondere mittels des zumindest einen Sensors 161, welcher in dem Gehäuse 100 angeordnet ist.

In Schritt 404 erfolgt sodann ein ansteuern der Zuführungsvorrichtung 200. Insbesondere wird die Zuführungsvorrichtung 200 derart angesteuert, dass einem durch den Abluftstutzen 130 geführten Brandfluid ein Verdünnungsfluid beigemischt wird.

Insbesondere wird vor Detektieren des Brandfalls kein Verdünnungsfluid in den Abluftstutzen 130 eingeführt.

## Patentansprüche

1. Verfahren zum Betreiben eines Energiespeicheraufbewahrungsbehälter umfassend
- ein Gehäuse, wobei das Gehäuse dazu eingerichtet ist, zumindest einen Energiespeicher aufzunehmen,
- zumindest einen an dem Gehäuse angeordneten Abluftstutzen, der dazu eingerichtet ist, einen Innenraum des Gehäuses fluidisch mit einem Außenraum des Gehäuses zu verbinden,
- eine in oder an dem Gehäuse angeordnete Zuführungsvorrichtung, die im Brandfall einem durch den Abluftstutzen aus dem Innenraum des Gehäuses in den Außenraum des Gehäuses fließenden Brandfluid ein Verdünnungsfluid beimischt umfassend die Schritte
- Detektieren eines Brandfalls, insbesondere mittels zumindest eines Sensors des Energiespeicheraufbewahrungsbehälters, danach
- Ansteuern der Zuführungsvorrichtung derart, dass mittels der Zuführungsöffnung einem durch den Abluftstutzen geführten Brandfluid ein Verdünnungsfluid beigemischt wird und
- Fluten des Gehäuses des Energiespeicheraufbewahrungsbehälters mit Löschfluid.

2. Verfahren zum Betreiben eines Energiespeicheraufbewahrungsbehälter gemäß Anspruch 1,
**dadurch gekennzeichnet,**
- **dass** der Abluftstutzen zumindest eine Zuführungsöffnung für die Zuführungsvorrichtung umfasst.

3. Verfahren zum Betreiben eines Energiespeicheraufbewahrungsbehälter gemäß Anspruch 1 oder 2,
**dadurch gekennzeichnet,**
- **dass** die Zuführungsvorrichtung über einen Verdünnungsfluidauslass fluidisch mit dem Abluftstutzen verbunden ist, insbesondere mit der Zuführungsöffnung, insbesondere unmittelbar.

4. Verfahren zum Betreiben eines Energiespeicheraufbewahrungsbehälter gemäß einem der vorangehenden Ansprüche,
**dadurch gekennzeichnet,**
- **dass** die Zuführungsvorrichtung zumindest teilweise oder vollständig innerhalb oder außerhalb des Gehäuses angeordnet ist.

5. Verfahren zum Betreiben eines Energiespeicheraufbewahrungsbehälter gemäß einem der vorangehenden Ansprüche,
**dadurch gekennzeichnet,**
- **dass** die Zuführungsvorrichtung und/oder der Abluftstutzen zumindest ein Vermischungsmittel umfasst, insbesondere zumindest eine Lamelle, ein Sieb, eine Schnecke, eine Verengung, eine Aufweitung, eine Ondulierung und/oder Kombinationen hieraus.

6. Verfahren zum Betreiben eines Energiespeicheraufbewahrungsbehälter gemäß einem der vorangehenden Ansprüche,
**dadurch gekennzeichnet,**
- **dass** die Zuführungsvorrichtung eine Verdünnungsfluidquelle umfasst, insbesondere
- ein Reservoir, welches insbesondere unter anderem Verdünnungsfluid enthält, und/oder
- eine Ansaugöffnung, welche insbesondere die Zuführungsvorrichtung fluidisch mit der Umgebung des Energiespeicheraufbewahrungsbehälters verbindet.

7. Verfahren zum Betreiben eines Energiespeicheraufbewahrungsbehälter gemäß einem der vorangehenden Ansprüche,
**dadurch gekennzeichnet,**
- in einem geöffneten Zustand der Zuführungsvorrichtung der Verdünnungsfluidauslass mit der Verdünnungsfluidquelle fluidisch verbunden ist und/oder in einem verschlossenen Zustand der Zuführungsvorrichtung der Verdünnungsfluidauslass von der Verdünnungsfluidquelle fluidisch getrennt ist.

8. Verfahren zum Betreiben eines Energiespeicheraufbewahrungsbehälter gemäß einem der vorangehenden Ansprüche,
**dadurch gekennzeichnet,**
- **dass** die Zuführungsvorrichtung einen Fluidantrieb umfasst, wobei der Fluidantrieb insbesondere dazu eingerichtet ist, das Verdünnungsfluid zu der Zuführungsöffnung anzutreiben, insbesondere ausgehend von der Verdünnungsfluidquelle.

9. Verfahren zum Betreiben eines Energiespeicheraufbewahrungsbehälter gemäß einem der vorangehenden Ansprüche,
**dadurch gekennzeichnet,**
- **dass** die Zuführungsöffnung im Bereich einer Verengung des Abluftstutzens angeordnet ist, insbesondere in einer Strömungsrichtung aus dem Innenraum in den Außenraum vor oder hinter der Verengung.

10. Verfahren zum Betreiben eines Energiespeicheraufbewahrungsbehälter gemäß einem der vorangehenden Ansprüche,
**dadurch gekennzeichnet,**
- **dass** die Zuführungsvorrichtung zumindest eine Kühlvorrichtung umfasst, wobei die Kühlvorrichtung insbesondere dazu eingerichtet ist, zumindest einen Teil des Verdünnungsfluids abzukühlen.

11. Verfahren zum Betreiben eines Energiespeicheraufbewahrungsbehälter gemäß einem der vorangehenden Ansprüche,
**dadurch gekennzeichnet,**
- **dass** das Verdünnungsfluid zumindest teilweise oder im Wesentlichen vollständig aus Luft gebildet ist, insbesondere Luft aus der Umgebung des Energiespeicheraufbewahrungsbehälters, und/oder aus einem inerten Gas, beispielsweise Stickstoff, und/oder aus Sauerstoff, Kohlendioxid, und/oder Kombinationen hieraus.

12. Verfahren zum Betreiben eines Energiespeicheraufbewahrungsbehälter gemäß einem der vorangehenden Ansprüche,
**dadurch gekennzeichnet,**
- **dass** der Energiespeicheraufbewahrungsbehälter, insbesondere der Abluftstutzen, einen Fluidbrecher, insbesondere einen Filter, eine Flammenfalle, einen Siphon und/oder Kombinationen hieraus aufweist, wobei insbesondere der Fluidbrecher, insbesondere in den Abluftstutzen, in einer Richtung ausgehend von dem Innenraum des Gehäuses zu dem Außenraum des Gehäuses vor der Zuführungsöffnung angeordnet ist.

13. Verfahren zum Betreiben eines Energiespeicheraufbewahrungsbehälter gemäß einem der vorangehenden Ansprüche,
**dadurch gekennzeichnet,**
- **dass** der Energiespeicheraufbewahrungsbehälter zumindest einen Sensor umfasst, der dazu eingerichtet ist, zumindest einen Messwert zu erfassen, wobei der Messwert indikativ für eine physikalische Größe innerhalb des Gehäuses ist, insbesondere für einen Zustand eines in dem Energiespeicheraufbewahrungsbehälter angeordneten Energiespeichers, wobei der Sensor insbesondere dazu eingerichtet ist, einen bevorstehenden und/oder vorliegenden Brandfall anhand des zumindest einen Messwerts zu detektieren.

14. Verfahren zum Betreiben eines Energiespeicheraufbewahrungsbehälter gemäß einem der vorangehenden Ansprüche,
**dadurch gekennzeichnet,**
- **dass** der Energiespeicheraufbewahrungsbehälter zumindest eine Steuerungseinrichtung umfasst, welche insbesondere dazu eingerichtet ist, die Zuführungsvorrichtung zu steuern, insbesondere in Abhängigkeit von zumindest einem von dem zumindest einen Sensor erfassten Messwert, wobei die Steuerungseinrichtung insbesondere dazu eingerichtet ist, die Zuführungsvorrichtung in den geöffneten und/oder in den geschlossenen Zustand zu steuern und/oder wobei die Steuerungseinrichtung insbesondere dazu eingerichtet ist, den Fluidantrieb zu steuern, insbesondere anzuschalten oder abzuschalten.

## Claims

1. A method for operating an energy storage container comprising
- a housing, wherein the housing is arranged to accommodate at least one energy storage device,
- at least one exhaust air outlet arranged on the housing, which is arranged to fluidically connect an interior of the housing with an exterior of the housing,
- a feed device arranged in or on the housing which, in the event of a fire, mixes a dilution fluid into a fire fluid flowing through the exhaust air outlet from the interior of the housing to the exterior of the housing,
comprising the steps of
- detecting a fire, in particular by means of at least one sensor of the energy storage container, then
- actuating the feed device in such a way that, by means of the feed opening, a dilution fluid is mixed into a fire fluid guided through the exhaust air outlet, and
- flooding the housing of the energy storage container with extinguishing fluid.

2. The method for operating an energy storage container according to claim 1, **characterized in that** the exhaust air outlet comprises at least one feed opening for the feed device.

3. The method for operating an energy storage container according to claim 1 or 2, **characterized in that** the feed device is fluidically connected to the exhaust air outlet via a dilution fluid outlet, in particular to the feed opening, in particular directly.

4. The method for operating an energy storage container according to any one of the preceding claims, **characterized in that** the feed device is arranged at least partially or completely inside or outside the housing.

5. The method for operating an energy storage container according to any one of the preceding claims, **characterized in that** the feed device and/or the exhaust air outlet comprises at least one mixing means, in particular at least one lamella, a sieve, a screw, a constriction, an expansion, an undulation and/or combinations thereof.

6. The method for operating an energy storage container according to any one of the preceding claims, **characterized in that** the feed device comprises a dilution fluid source, in particular a reservoir which, in particular, contains dilution fluid, and/or an intake opening which, in particular, fluidically connects the feed device to the surroundings of the energy storage container.

7. The method for operating an energy storage container according to any one of the preceding claims, **characterized in that**, in an open state of the feed device, the dilution fluid outlet is fluidically connected to the dilution fluid source, and/or, in a closed state of the feed device, the dilution fluid outlet is fluidically separated from the dilution fluid source.

8. The method for operating an energy storage container according to any one of the preceding claims, **characterized in that** the feed device comprises a fluid drive, the fluid drive being arranged in particular to drive the dilution fluid to the feed opening, in particular starting from the dilution fluid source.

9. The method for operating an energy storage container according to any one of the preceding claims, **characterized in that** the feed opening is arranged in the area of a constriction of the exhaust air outlet, in particular in a flow direction from the interior to the exterior in front of or behind the constriction.

10. The method for operating an energy storage container according to any one of the preceding claims, **characterized in that** the feed device comprises at least one cooling device, the cooling device being arranged in particular to cool at least part of the dilution fluid.

11. The method for operating an energy storage container according to any one of the preceding claims, **characterized in that** the dilution fluid is formed at least partially or substantially entirely from air, in particular air from the surroundings of the energy storage container, and/or from an inert gas, for example nitrogen, and/or from oxygen, carbon dioxide, and/or combinations thereof.

12. The method for operating an energy storage container according to any one of the preceding claims, **characterized in that** the energy storage container, in particular the exhaust air outlet, has a fluid breaker, in particular a filter, a flame trap, a siphon and/or combinations thereof, wherein in particular the fluid breaker, in particular in the exhaust air outlet, is arranged in a direction starting from the interior of the housing to the exterior of the housing in front of the feed opening.

13. The method for operating an energy storage container according to any one of the preceding claims, **characterized in that** the energy storage container comprises at least one sensor which is arranged to detect at least one measured value, wherein the measured value is indicative of a physical variable within the housing, in particular of a state of an energy storage device arranged in the energy storage container, wherein the sensor is arranged in particular to detect an imminent and/or existing fire on the basis of the at least one measured value.

14. The method for operating an energy storage container according to any one of the preceding claims, **characterized in that** the energy storage container comprises at least one control device which is arranged in particular to control the feed device, in particular as a function of at least one measured value detected by the at least one sensor, wherein the control device is arranged in particular to control the feed device into the open and/or closed state, and/or wherein the control device is arranged in particular to control the fluid drive, in particular to switch it on or off.

## Revendications

1. Méthode pour exploiter un contenant de stockage d'énergie comprenant
- un boîtier, où le boîtier est configuré pour accueillir au moins un accumulateur d'énergie,
- au moins une tubulure d'évacuation disposée au boîtier, qui est configurée pour relier fluidiquement un espace intérieur du boîtier à un espace extérieur du boîtier,
- un dispositif d'alimentation disposé dans ou au boîtier, qui, en cas d'incendie, mélange un fluide de dilution à un fluide d'incendie s'écoulant à travers la tubulure d'évacuation de l'espace intérieur du boîtier vers l'espace extérieur du boîtier, comprenant les étapes
- détecter un incendie, en particulier au moyen d'au moins un capteur du contenant de stockage d'énergie, puis
- commander le dispositif d'alimentation de telle sorte que, au moyen de l'ouverture d'alimentation, un fluide de dilution est mélangé à un fluide d'incendie guidé à travers la tubulure d'évacuation et
- inonder le boîtier du contenant de stockage d'énergie avec du fluide extincteur.

2. Méthode pour faire fonctionner un contenant de stockage d'énergie selon la revendication 1,
**caractérisée en ce,**
- **que** la tubulure d'évacuation comprend au moins une ouverture d'alimentation pour le dispositif d'alimentation.

3. Méthode pour faire fonctionner un contenant de stockage d'énergie selon la revendication 1 ou 2,
**caractérisée en ce,**
- **que** le dispositif d'alimentation est relié fluidiquement à la tubulure d'évacuation par une sortie de fluide de dilution, en particulier à l'ouverture d'alimentation, en particulier directement.

4. Méthode pour faire fonctionner un contenant de stockage d'énergie selon l'une des revendications précédentes,
**caractérisée en ce,**
- **que** le dispositif d'alimentation est disposé au moins partiellement ou complètement à l'intérieur ou à l'extérieur du boîtier.

5. Méthode pour faire fonctionner un contenant de stockage d'énergie selon l'une des revendications précédentes,
**caractérisée en ce,**
- **que** le dispositif d'alimentation et/ou la tubulure d'évacuation comprend au moins un moyen de mélange, en particulier au moins une lamelle, un tamis, une vis, un rétrécissement, un élargissement, une ondulation et/ou des combinaisons de ceux-ci.

6. Méthode pour faire fonctionner un contenant de stockage d'énergie selon l'une des revendications précédentes,
**caractérisée en ce,**
- **que** le dispositif d'alimentation comprend une source de fluide de dilution, en particulier
- un réservoir qui contient en particulier, entre autres, du fluide de dilution, et/ou
- une ouverture d'aspiration qui relie en particulier fluidiquement le dispositif d'alimentation à l'environnement du contenant de stockage d'énergie.

7. Méthode pour faire fonctionner un contenant de stockage d'énergie selon l'une des revendications précédentes,
**caractérisée en ce,**
- **que** dans un état ouvert du dispositif d'alimentation, la sortie de fluide de dilution est reliée fluidiquement à la source de fluide de dilution et/ou dans un état fermé du dispositif d'alimentation, la sortie de fluide de dilution est fluidiquement séparée de la source de fluide de dilution.

8. Méthode pour faire fonctionner un contenant de stockage d'énergie selon l'une des revendications précédentes,
**caractérisée en ce,**
- **que** le dispositif d'alimentation comprend un entraînement de fluide, où l'entraînement de fluide est en particulier configuré pour entraîner le fluide de dilution vers l'ouverture d'alimentation, en particulier à partir de la source de fluide de dilution.

9. Méthode pour faire fonctionner un contenant de stockage d'énergie selon l'une des revendications précédentes,
**caractérisée en ce,**
- **que** l'ouverture d'alimentation est disposée dans la zone d'un rétrécissement de la tubulure d'évacuation, en particulier dans une direction d'écoulement de l'espace intérieur vers l'espace extérieur avant ou après le rétrécissement.

10. Méthode pour faire fonctionner un contenant de stockage d'énergie selon l'une des revendications précédentes,
**caractérisée en ce,**
- **que** le dispositif d'alimentation comprend au moins un dispositif de refroidissement, où le dispositif de refroidissement est en particulier configuré pour refroidir au moins une partie du fluide de dilution.

11. Méthode pour faire fonctionner un contenant de stockage d'énergie selon l'une des revendications précédentes,
**caractérisée en ce,**
- **que** le fluide de dilution est composé au moins partiellement ou essentiellement complètement d'air, en particulier d'air provenant de l'environnement du contenant de stockage d'énergie, et/ou d'un gaz inerte, par exemple de l'azote, et/ou d'oxygène, de dioxyde de carbone, et/ou de combinaisons de ceux-ci.

12. Méthode pour faire fonctionner un contenant de stockage d'énergie selon l'une des revendications précédentes,
**caractérisée en ce,**
- **que** le contenant de stockage d'énergie, en particulier la tubulure d'évacuation, a un brise-flux, en particulier un filtre, un piège à flammes, un siphon et/ou des combinaisons de ceux-ci, où en particulier le brise-flux, en particulier dans la tubulure d'évacuation, est disposé dans une direction allant de l'espace intérieur du boîtier vers l'espace extérieur du boîtier avant l'ouverture d'alimentation.

13. Méthode pour faire fonctionner un contenant de stockage d'énergie selon l'une des revendications précédentes,
**caractérisée en ce,**
- **que** le contenant de stockage d'énergie comprend au moins un capteur configuré pour acquérir au moins une valeur de mesure, où la valeur de mesure est indicative d'une grandeur physique à l'intérieur du boîtier, en particulier d'un état d'un accumulateur d'énergie disposé dans le contenant de stockage d'énergie, où le capteur est en particulier configuré pour détecter un incendie imminent et/ou présent au moyen de l'au moins une valeur de mesure.

14. Méthode pour faire fonctionner un contenant de stockage d'énergie selon l'une des revendications précédentes,
**caractérisée en ce,**
- **que** le contenant de stockage d'énergie comprend au moins une unité de commande qui est en particulier configurée pour commander le dispositif d'alimentation, en particulier en fonction d'au moins une valeur de mesure acquise par l'au moins un capteur, où l'unité de commande est en particulier configurée pour commander le dispositif d'alimentation dans l'état ouvert et/ou dans l'état fermé et/ou où l'unité de commande est en particulier configurée pour commander l'entraînement de fluide, en particulier pour le mettre en marche ou l'arrêter.
